# NEW EUROPEAN PATENT SPECIFICATION

(11) **EP 0 593 681 B2**
(45) Date of publication and mention of the opposition decision: **11.08.1999**
(45) Mention of the grant of the patent: 04.10.1995
(21) Application number: 92917733.5
(22) Date of filing: 08.07.1992
(51) Int. Cl.: A01D 45/00, A01G 5/00, A01D 47/00, A01D 33/00

(54) **DEVICE FOR HARVESTING CROPS**
ERNTEMASCHINE
DISPOSITIF SERVANT A RECOLTER LES CULTURES

(30) Priority: 09.07.1991 NL 9101206
(43) Date of publication of application: 27.04.1994
(73) Proprietor: NIC SOSEF B.V., NL-2675 ZG Honselersdijk (NL)
(72) Inventor: VAN DER ZALM, Theodorus Johannes Maria, NL-2670 AE Naaldwijk (NL)
(74) Representative: de Bruijn, Leendert C.
(86) International application number: NL9200123
(87) International publication number: WO9300792

(56) References cited:
- DE-A- 2 628 869
- DE-U- 8 518 092
- FR-A- 2 398 442
- FR-A- 2 539 948
- US-A- 2 526 543

## Description

The invention relates to a device for harvesting crops, comprising a feed means, a cutting means and a conveyor means for parts cut away, and a drive for moving the device over the ground, while control means are present and are designed to adapt the speed of the conveyor means to the speed of travel of the device over the ground in such a way that the cut crop in the conveyor means is essentially not moved relative to the ground.

Such a device is known from French Patent Publication 2,539,948. This publication describes a device for harvesting crops, which is fitted laterally on the tractor extending parallel thereto. In this case this device is provided at the front side with feed shoes for guiding the crop into the feed means. This device is intended for harvesting leaf vegetables.

However, efforts are also being made to mechanise the harvesting of crops in other areas. For example, a cutter bar for chrysanthemums is described in the "Vakblad van de Bloemmisterij" 31 (1990). This cutter bar comprises a mobile shearing machine. It is provided at one side with a wheel and at the other side with a slide, between which a par of blades moving over each other extends, in order to permit the cutting of a number of rows of chrysanthemums. This cutter bar is moved by pushing with the foot. The cutting action can be achieved with a motor by operating a switch. Such a device has the disadvantage that the chrysanthemum picker has to move along the device himself and switch it on and off regularly. Chrysanthemums are normally supported not only by the ground, but also by a net put up some distance above the ground. If the chrysanthemums are relatively tall, there is a risk that after cutting with such a cutter bar they will fall over, and in other cases there is a risk that the chrysanthemums will shoot through the mesh and subsequently be difficult for the picker to reach and pick.

In the prior art the chrysanthemums are therefore still always pulled out of the ground complete with root ball. It is clear that this is very tiring, especially since the picker has to harvest a number of rows from one position, which means that he has to reach particularly far.

The object of the invention is to provide a device by means of which it is possible to harvest chrysanthemums or similar plants which are supported by means of a net.

This object is achieved in the case of a device of the kind described above by the features of the characterising portion of claim 1. For chrysanthemums the maximum height of the crop is 1.5 m. A net to keep the plants together is then put up at no more than 1.4 m, so that the maximum height of the device is lower than 1.30 m.

Since the device according to the invention is placed between the net and the ground, it is necessary for it to move over the ground in some way without being controlled from the top. This is achieved according to the invention by the provision of locating means. Unlike the abovementioned French patent, the path of the device is determined by the position of the crop, and not the other way round. In addition, the device is self-propelling, in order to automate the harvesting operation. Finally, it is lower in height than the crop to be harvested. With the device known from French Patent 2,539,948 it is, of course, not possible to move between net and plants. In the case of the device according to the present invention, the plant will remain in the same horizontal position relative to the ground for some time after cutting, in which time the picker can detach the plant from the support, such as the net, and take it away. The conveyor means ensure that the plant can be moved in the vertical position. This means, on the one hand, that the picker has more time and freedom to remove the crop while, on the other, damage through accidental movement thereof is prevented.

The conveyor means in another advantageous embodiment comprise two adjacent driven belts. From the abovementioned French Patent Specification 2,539,948 it is known to make these two belts run against each other and clamp the stem of the plant between them. It has, however, been found that, on the one hand, this produces the risk of damage and, on the other, the removal of the plant from between the two adjacent belts is extremely difficult. In the case of the present invention which is, inter alia, intended for the harvesting of chrysanthemums, damage to the stems is particularly undesirable, and it is important, on the one hand, that the conveyor means should hold the chrysanthemums but, on the other, that it should be simple to remove them. Since the chrysanthemums are supported by a further support, such as the net, tight wedging as in the case of the French patent, is not necessary. It has been found that the objects mentioned above can be achieved particularly advantageously if the belts when in the position for use are displaced in height relative to each other. This results in the stem of the plant in question being held slightly curved between two successive belts, but it is possible to pull the plant through between the belts. This also gives the advantageous effect that any leaves present on the stem below the belts are torn off when the plant is being pulled out.

The locating means can comprise all means known in the prior art, such as light and sound guides and other established positioning means. According to an advantageous embodiment, use is made of a number of slides disposed parallel to each other. Since many crops are grown on raised beds with furrows on the ground between them, where slides are used the device will be controlled in such a way that the slides lie in the furrows. In this way it is particularly simple to provide for accurate positioning of the crop relative to the feed means of the device. The locating means are disposed at the front side of the device, and wheels, caterpillars and the like, which are driven, are provided on the rear side. In order to keep the weight of the device as low as possible for purposes of this locating, according to an advantageous embodiment of the invention, provision is made for a mobile trailer to be coupled to the device to hold the heavy components. This ensures that the locating sensitivity of the device is not influenced, while heavier parts, such as a battery, for the drive can still be taken along.

According to an advantageous embodiment of the invention, the cutting means comprise a toothed cutting surface. It has been found that with a toothed cutting surface a lower cutting speed is needed to achieve cutting, while the time during which the cutting is being carried out is also shorter, with low noise production. Energy can be saved in this way, which is particularly important in the case of a self-propelling device.

It goes without saying that the device is designed for simultaneous cutting of a number of rows of plants. For this, various feed, cutting and conveyor means will be present. According to an advantageous embodiment of the invention, the drive is common for all cutting means, and the same applies to the drive of the conveyor means.

The invention will be explained in greater detail below with reference to an example of an embodiment illustrated in the drawings, in which:
Fig. 1 shows a perspective, partially cut-away view of a field on which a crop is being grown, with the device according to the invention shown therein;
Fig. 2 shows the top view of the device according to Fig. 1, but without trailer;
Fig. 3 shows a perspective side view of the device according to Fig. 1;
Fig. 4 shows a detail of the feed side of the device according to Fig. 1;
Fig. 5 shows the position of the plant during and after cutting; and
Fig. 6 shows the locating means of the device according to the invention.

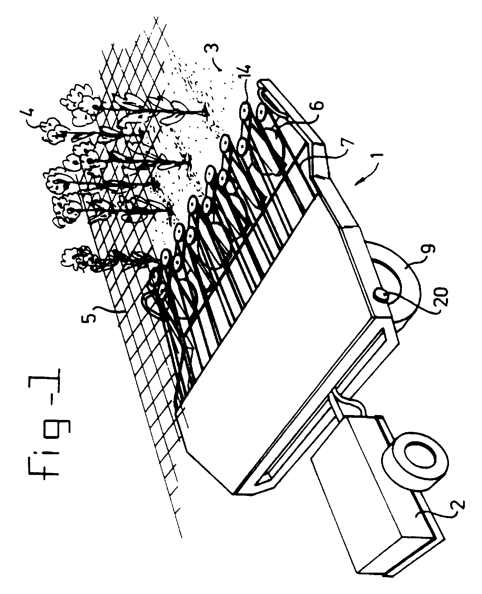

The device according to the invention is indicated in its entirety by 1 in Fig. 1. A trailer 2 is coupled to it. The device is placed on ground 3 of a field on which a crop 4, such as chrysanthemums, is being grown. Since such chrysanthemums are relatively fragile, a net 5 is put up, in order to support these chrysanthemums. The device 1 and the trailer 2 according to the invention are made so low that they can move below the net 5.

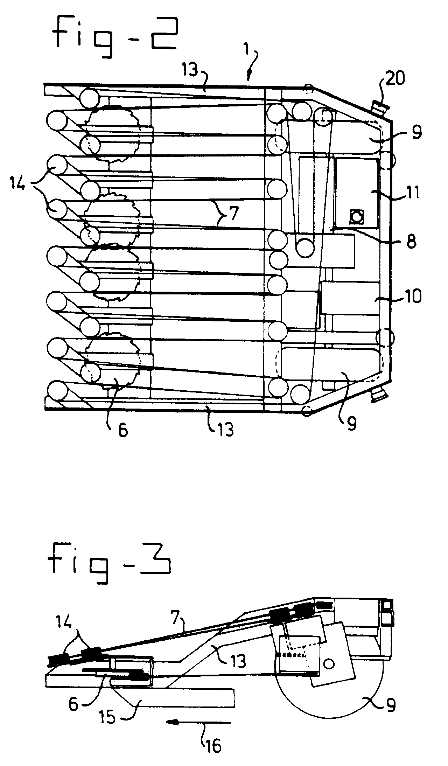

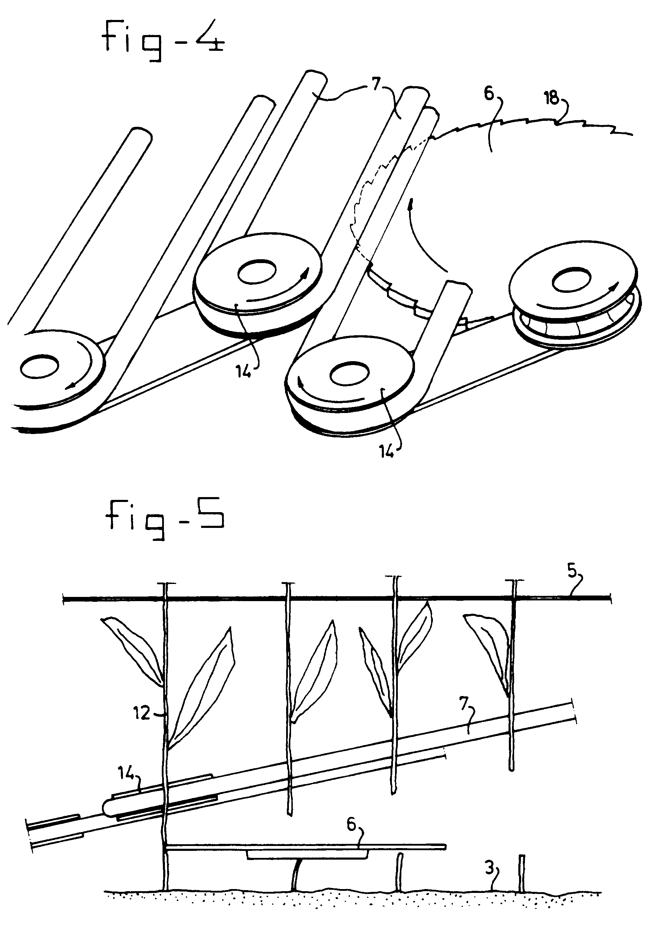

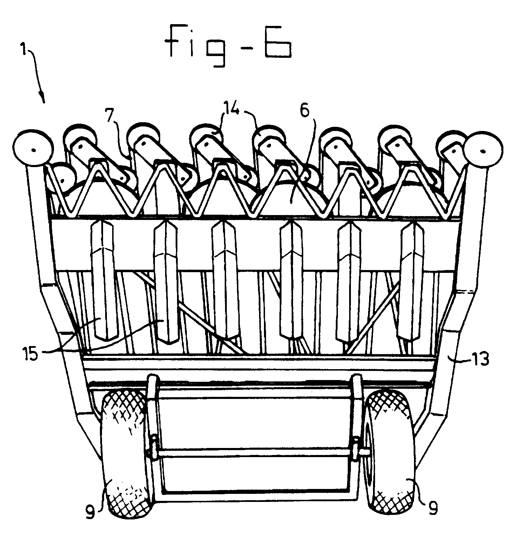

Fig. 2 shows a top view of the device of Fig. 1. It can be seen that it comprises a number of cutters 6. These cutters are driven by a common drive, not shown here. Conveyor means 7, belts in this case, are also present, some of which are shown in greater detail in Fig. 4. Belt 7 is a single continuous belt driven by a motor 8 with reduction gearing. Device 1 is provided with wheels 9 which are driven by a motor 10. Control means 11 are also present, by which both the speed of movement of the device 11 over the ground 3 and the speed of movement of the belt 7, and thus of the conveyor means, can be controlled. Control means 11 are designed in such a way that when the device 1 is moved over the ground the stems 12 which have been cut off (Fig. 5) the chrysanthemums do not move horizontally relative to the ground, and thus do not move relative to net 5. In the embodiment shown here this is achieved by electronic means but it is, of course, also possible to fix the speed of the belts 7 relative to the speed of wheels 9 by providing suitable gears.

As can be seen in particular from Fig. 3 and Fig. 6, the frame 13 on which reversing rollers 14 are fitted for the belts also has present on it a set of slides 15 for the belts and also the cutting wheels 6 and the various parts described above. A propulsion direction is indicated by arrow 16 in Fig. 3. The slides 15 are disposed at a distance from each other which corresponds to the distance between the various rows of chrysanthemums 4, as shown in Fig. 1. This means that the slides 15 during use run in the furrows lying next to the beds on which the chrysanthemums are placed.

A detail of the feed end of the device 1 shown in Fig. 2 is shown in Fig. 4, as already indicated. It can be seen that the belt parts 7 between which the stems 12 of the plants are accommodated are arranged slightly displaced in height relative to each other, so that the stem is not compressed between two belts, and that the stem is easy to remove from between the two belts. After all, the stems 12 are supported by net 5. It can also be seen from Fig. 4 that cutting wheel 6 is provided with a knurled toothing system 18. After the stem in question has been placed by rollers 14 in the nip between the two belts 7, it will be gripped by cutting wheel 6 in the optimum position after travelling a short distance, and will be cut through by the knurled toothing system in one or more "strokes". This method of cutting requires little energy and also produces hardly any noise nuisance. After this - and this is shown further in Fig. 5 - the stems move gradually upwards. The picker next to the machine always sees a number of stems coming up in a field of plants, and knows that they have just been cut and that he can pull them up through the net. Where plants are grown close together, in practice the device 1 according to the invention will not be seen by the picker. In order to ensure that he can still switch off the device in an emergency, emergency switches 20 are present on either side, ergonomically placed. The power supply to the device is by means of a battery (not shown) in trailer 2. When the battery is run down, the device 1 can continue to be used, simply by coupling another trailer. The use of such a trailer has the further advantage that the weight of device 1 can be relatively low, which increases the locating sensitivity of the slide 15. A certain self-centring effect of the device will also be obtained through the stems of the plants not yet cut entering between the rollers 14.

Of course, the device can be provided with further guard means, in order to minimise the hazard to the picker.

As an example, it can be said that the device according to the invention has a height of approximately 27 cm. This ensures that harvesting can take place under any type of stretched net 5. The harvesting width in the case of, for example, chrysanthemums can be seven rows. A saving of at least 50% in personnel can be achieved with such a device. Although the device above is shown with a single support for the crop, a further support, for example comprising a further two belts disposed higher up or lower down than the belts shown, can be present.

By means of the invention it is possible also to harvest by cutting crops which are grown under a net, which gives the advantageous result that root remains stay behind in the ground, and need not be cut off only after harvesting and returned to enrich the soil.

Although the invention is described above with reference to a preferred embodiment, it must be understood that numerous modifications can be made to it without going beyond the scope of the appended claims. The invention can therefore be used for all crops of a suitable type.

## Claims

1. Device for harvesting crops, comprising a feed means, a cutting means and a conveyor means for parts cut away, and a drive for moving the device over the ground, while control means are present and are designed to adapt the speed of the conveyor means to the speed of travel of the device over the ground in such a way that the cut crop in the conveyor means is essentially not moved relative to the ground, characterised in that at the front side, viewed in the direction of movement, the device is provided with locating means, which engage either the crop to be harvested or, its root ball or the furrow between the crops and which serve to operate an automatic guidance system, in order to determine the path of the device, the device is self-propelling, battery driven, and has a height lower than 1.30 m and is designed for simultaneous cutting of a number of rows of plants.

2. Device according to Claim 1, in which the locating means comprise a number of slides disposed parallel to each other.

3. Device according to one of the preceding claims, in which the conveyor means comprise two adjacent driven belts.

4. Device according to Claim 3, in which in the position for use the belts are displaced in height relative to each other.

5. Device according to one of the preceding claims, in which a mobile trailer is coupled thereto.

6. Device according to one of the preceding claims, in which the cutting means comprise a toothed cutting surface.

7. Device according to one of the preceding claims, comprising at least two feed, cutting and conveyor means, in which a common drive is always present for the cutting means and for the conveyor means.

## Patentansprüche

1. Vorrichtung zum Ernten von Feldfrüchten, mit einer Zuführeinrichtung, einer Schneideeinrichtung und einer Fördereinrichtung für weggeschnittene Teile sowie einem Antrieb, um die Vorrichtung über den Boden hinwegzubewegen, während Steuermittel vorliegen und dazu ausgebildet sind, die Geschwindigkeit der Fördereinrichtung an die Fahrgeschwindigkeit der Vorrichtung über den Boden hinweg so anzupassen, daß die abgeschnittene Feldfrucht in der Fördereinrichtung im wesentlichen nicht relativ zum Boden bewegt wird, dadurch **gekennzeichnet**, daß an der Vorderseite, in Bewegungsrichtung gesehen, die Vorrichtung mit Lokalisierungsmitteln versehen ist, die entweder in eine zu erntende Feldfrucht oder ihren Wurzelballen oder in die Furche zwischen den Feldfrüchten eingreifen und dazu dienen, ein automatisches Führungssystem zu betätigen, um die Bahn der Vorrichtung festzulegen, wobei die Vorrichtung selbstfahrend und batteriebetrieben ist und ihre Höhe niedriger ist als 1,30 m und für den gleichzeitigen Schnitt einer Anzahl von Reihen von Pflanzen ausgelegt ist.

2. Vorrichtung nach Anspruch 1, worin die Lokalisierungsmittel eine Anzahl von Gleitkörpern aufweisen, die parallel zueinander angeordnet sind.

3. Vorrichtung nach einem der vorangehenden Ansprüche, worin die Fördermittel zwei benachbarte, angetriebene Riemen aufweisen.

4. Vorrichtung nach Anspruch 3, worin die Riemen in der Gebrauchslage der Höhe nach relativ zueinander versetzt sind.

5. Vorrichtung nach einem der vorangehenden Ansprüche, worin ein beweglicher Anhänger an sie angekoppelt ist.

6. Vorrichtung nach einem der vorangehenden Ansprüche, worin die Schneideeinrichtung eine gezahnte Schneidefläche aufweist.

7. Vorrichtung nach einem der vorangehenden Ansprüche, mit mindestens zwei Zuführ-, Schneide- und Fördereinrichtungen, worin für die Schneideeinrichtungen und für die Fördereinrichtungen stets ein gemeinsamer Antrieb vorliegt.

## Revendications

1. Dispositif destiné à ramasser des récoltes, comportant des moyens d'avance, des moyens de coupe et des moyens de transport pour des parties coupées, et une transmission destinée à déplacer le dispositif sur le sol, alors que des moyens de commande sont présents et sont conçus de façon à adapter la vitesse des moyens de transport en fonction de la vitesse de déplacement du dispositif sur le sol d'une manière telle que la récolte coupée dans les moyens de transport n'est pas sensiblement pas déplacée par rapport au sol, caractérisé en ce que, au niveau du côté avant, vu dans la direction de déplacement, le dispositif est pourvu de moyens de positionnement, qui engagent soit la récolte devant être ramassée, soit sa racine ou le sillon entre les récoltes et qui servent à actionner un système de guidage automatique, afin de déterminer la trajectoire du dispositif, le dispositif étant autopropulsé, à accumulateurs et à une hauteur inférieure à 1,3 m et est de par sa conception simultanément destiné à couper nombre de racines de plantes.

2. Dispositif selon la revendication 1, dans lequel les moyens de positionnement comportent plusieurs glissières disposées parallèlement l'une à l'autre.

3. Dispositif selon l'une quelconque des revendications précédentes, dans lequel les moyens de transport comportent deux courroies adjacentes entraînées.

4. Dispositif selon la revendication 3, dans lequel, dans la position d'utilisation, les courroies sont déplacées en hauteur l'une par rapport à l'autre.

5. Dispositif selon l'une quelconque des revendications précédentes, dans lequel une remorque est accouplée.

6. Dispositif selon l'une quelconque des revendications précédentes, dans lequel les moyens de coupe comportent une surface de coupe dentée.

7. Dispositif selon l'une quelconque des revendications précédentes, comportant au moins deux moyens d'avance, de coupe et de transport, dans lequel une transmission commune est toujours présente pour les moyens de coupe et les moyens de transport.
